(19) Europäisches Patentamt
European Patent Office
Office européen des brevets

(11) **EP 4 173 942 B1**

(12) **EUROPEAN PATENT SPECIFICATION**

(45) Date of publication and mention
of the grant of the patent:
**24.09.2025 Bulletin 2025/39**

(21) Application number: **21829226.6**

(22) Date of filing: **08.06.2021**

(51) International Patent Classification (IPC):
*G01C 21/20* (2006.01)       *B63B 49/00* (2006.01)
*B63B 43/20* (2006.01)       *G08G 3/02* (2006.01)
*G06T 19/00* (2011.01)       *G06T 5/50* (2006.01)
*H04N 13/189* (2018.01)

(52) Cooperative Patent Classification (CPC):
**G06T 19/006; G01C 21/203; G08G 3/02;**
B63B 49/00; G06T 2219/004

(86) International application number:
**PCT/KR2021/007157**

(87) International publication number:
**WO 2021/261810 (30.12.2021 Gazette 2021/52)**

(54) **NAVIGATION ASSISTANCE DEVICE USING AUGMENTED REALITY AND 3D IMAGES**

NAVIGATIONSHILFSVORRICHTUNG MIT ERWEITERTER REALITÄT UND 3D-BILDERN

DISPOSITIF D'AIDE À LA NAVIGATION UTILISANT UNE RÉALITÉ AUGMENTÉE ET DES IMAGES 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2020 KR 20200076877
07.07.2020 KR 20200083338**

(43) Date of publication of application:
**03.05.2023 Bulletin 2023/18**

(73) Proprietor: **Mapsea Corp.
Seongnam-si, Gyeonggi-do 13612 (KR)**

(72) Inventor: **KIM, Ji Soo
Yongin-si, Gyeonggi-do 16801 (KR)**

(74) Representative: **M. Zardi & Co S.A.
Via G. B. Pioda, 6
6900 Lugano (CH)**

(56) References cited:
WO-A2-2013/012280       CN-A- 110 520 692
JP-A- 2020 036 201       KR-A- 20200 050 808
KR-B1- 101 004 126       KR-B1- 101 072 397
KR-B1- 101 539 061       KR-B1- 101 549 513
US-A1- 2014 160 165

## Description

## TECHNICAL FIELD

The present invention relates to a navigation assistance device using augmented reality or 3D images.

## BACKGROUND ART

According to domestic and foreign shipping academic papers, navigational negligence occupies 82.8% of the total cause of marine accidents, and human navigational negligence such as neglect of vigilance or improper shipbuilding occupies 96.9% of crash accidents among them. Particularly, according to JNPR papers, it is determined that a lot of information about advanced navigation equipment displayed on a 2D screen invites difficulties in decision-making of navigators. For example, since hundreds of ships and landmarks are detected at a time in the Singapore Strait, and navigators see forward after checking the 2D radar screen, it takes a lot of time to compare and analyze the ships and the surrounding environments.

Since ships have a long stopping distance of 1 to 2km unlike automobiles or aircrafts, intuitive and rapid decision-making is very important. In the case of ships priced some ten billion Korean Won per ship, a single accident directly leads to a problem of compensation exceeding trillions of Korean Won. To prevent this problem, shipping companies use navigation equipment that costs billions of Korean Won. All the data extracted from the navigation equipment are collected in the vessel data recorder (VDR) and the automatic identification system (AIS). However, since there is a limitation in that the data flowing into the VDR and the AIS are 2D data, navigators spend a lot of time in analyzing the data even in a situation that requires a spontaneous determination, such as sailing in a narrow strait where a large number of ships are densely populated.

In addition, although visibility of navigators operating a ship rapidly decreases during nighttime operation or in an adverse weather condition such as heavy rain, sea fog, or the like, the navigators have difficulties in operating the ship by analyzing only 2D data even in this situation. KR101072397B1 discloses a marine augmented reality system using the monitor comprising the output unit outputting in the location of the external image through the monitor the information of the recognition part: receiver: matching unit: which it controls the real external image through external image data received to the receiver and camera is in accord with and external image data adjusted upward through the matching unit receives external image data the information according to the direction which the location and camera of ship take a photograph from the outside topography database about the outside topography recognizes clearly the direction which the location and camera of the camera: ship transmitting the external image of ship in the monitor installed at the steering house of ship: monitor take a photograph.

## DISCLOSURE OF INVENTION

## TECHNICAL PROBLEM

Therefore, the present invention has been made in view of the above problems, and it is an object of the present invention to provide a navigation assistance device that displays a ship in operation, other adjacent ships, and surrounding environments in augmented reality or 3D images.

## TECHNICAL SOLUTION

To accomplish the above object, according to one aspect of the present invention, there is provided a navigation assistance device using an augmented reality image, the device comprising: a communication unit for receiving AIS data from an automatic identification system; a control unit for generating an augmented reality navigation image, by determining first ship information of a first ship boarded with a user and second ship information of a second ship arranged at a location adjacent to the first ship on the basis of the AIS data, and receiving a navigation image obtained by photographing outside the first ship from a camera module; an augmented reality image generation unit for generating the second ship as a first augmented reality image on the basis of the first ship information and the second ship information; and an image display unit for displaying the augmented reality navigation image, wherein the first ship information may include GPS coordinates, speed, and moving direction of the first ship, and the second ship information includes GPS coordinates, speed, and moving direction of the second ship, and the control unit may generate the augmented reality navigation image by analyzing the navigation image and overlapping the first augmented reality image at a location of the second ship in the navigation image.

According to an embodiment, the control unit may receive a photographing direction from the camera module and determine an orientation of the navigation image, determine GPS coordinates of the first ship on the basis of the first ship information, and set GPS coordinates in the navigation image on the basis of the GPS coordinates of the first ship.

According to an embodiment, the control unit may partition the navigation image into a plurality of regions, determine a distance to each region in correspondence to an angle formed by each region with respect to the camera module and the surface of the sea, and set GPS coordinates in each of the regions in correspondence to the determined distance and the direction.

According to an embodiment, the control unit may select a first region having GPS coordinates matching the GPS coordinates of the second ship among the regions, and generate the augmented reality navigation image by overlapping the first augmented reality image on the first region.

According to an embodiment, the communication unit may receive ECDIS data from an electronic chart display and information system, the control unit may determine environment information about a surrounding environment on the basis of the ECDIS data, the augmented reality image generation unit may generate the surrounding environment as a second augmented reality image on the basis of the environment information, and the control unit may generate the augmented reality navigation image by analyzing the navigation image and overlapping the second augmented reality image at a location of the surrounding environment in the navigation image.

According to an embodiment, the control unit may analyze the first and second ship information at a first time point, select a second ship that will be adjacent to the first ship by less than a first reference distance after the first time point when the moving route and speed of each ship are maintained, and determine the selected second ship as a collision risk ship.

According to an embodiment, the control unit may display only the first augmented reality image of the second ship selected among a plurality of second ships as a collision risk ship to be overlapped with the navigation image.

According to an embodiment, the control unit may implement the other ships among the plurality of second ships as identification symbols and display the identification symbols on the augmented reality navigation image.

According to another aspect of the present invention, there is provided a navigation assistance device using an augmented reality image, the device comprising: a communication unit for receiving radar data from a marine radar; a control unit for generating an augmented reality navigation image, by determining first ship information of a first ship boarded with a user and second ship information of a second ship arranged at a location adjacent to the first ship on the basis of the radar data, and receiving a navigation image obtained by photographing outside the first ship from a camera module; an augmented reality image generation unit for generating the second ship as a first augmented reality image on the basis of the first ship information and the second ship information; and an image display unit for displaying the augmented reality navigation image, wherein the first ship information includes GPS coordinates, speed, and moving direction of the first ship, and the second ship information includes GPS coordinates, speed, and moving direction of the second ship, and the control unit generates the augmented reality navigation image by analyzing the navigation image and overlapping the first augmented reality image at a location of the second ship in the navigation image.

According to still another aspect of the present invention, there is provided a navigation assistance device using 3D images, the device comprising: a communication unit for receiving AIS data from an automatic identification system, and receiving ECDIS data from an electronic chart display and information system; a control unit for determining first ship information of a first ship boarded with a user and second ship information of a second ship arranged at a location adjacent to the first ship on the basis of the AIS data, and determining environment information about a surrounding environment surrounding the first ship on the basis of the ECDIS data; a 3D image generation unit for generating a 3D navigation image that implements the first ship, the second ship, and the surrounding environment as 3D images on the basis of the first ship information, the second ship information, and the environment information; and an image display unit for displaying the 3D navigation image in real time.

According to an embodiment, the first ship information may include the speed of the first ship and a moving direction of the first ship, and the second ship information includes the speed of the second ship and the moving direction of the second ship.

According to an embodiment, the control unit may analyze the first and second ship information at a first time point, select a second ship that will be adjacent to the first ship by less than a first reference distance after the first time point when the moving route and speed of each ship are maintained, and determine the selected second ship as a collision risk ship.

According to an embodiment, the 3D image generation unit may implement only collision risk ships among a plurality of second ships as 3D images, and display the 3D images on the 3D navigation image.

According to an embodiment, the 3D image generation unit may implement the other ships among the plurality of second ships as identification symbols, and display the identification symbols on the 3D navigation image.

According to an embodiment, the control unit may determine the collision risk ships by analyzing the first and second ship information at a period shorter than a reference period as the first distance between the second ship closest to the first ship, among the plurality of second ships, and the first ship reduces to be smaller than a second reference distance at the first time point.

According to an embodiment, when the first distance at the first time point is equal to or greater than the second reference distance, the control unit may determine the collision risk ship by analyzing the first and second ship information at every reference period.

According to an embodiment, the 3D image generation unit may display the second ship and the surrounding environment around the first ship in consideration of a first distance between the first ship and the second ship and a second distance between the first ship and the surrounding environment.

According to an embodiment, the first ship information may include a submerged depth in the water of the first ship, and width information of the first ship, the environment information may include water depth information, the control unit may determine a first sea route through which the first ship may move by comparing the depth in the water and the width information with the water depth information, and the 3D image generation unit may display the first sea route and other regions in colors distinguished from each other.

According to still another aspect of the present invention, there is provided a navigation assistance device using 3D images, the device comprising: a communication unit for receiving radar data from a marine radar; a control unit for determining first ship information of a first ship boarded with a user and second ship information of a second ship arranged at a location adjacent to the first ship on the basis of the radar data, and determining environment information about a surrounding environment surrounding the first ship; a 3D image generation unit for generating a 3D navigation image that implements the first ship, the second ship, and the surrounding environment as 3D images on the basis of the first ship information, the second ship information, and the environment information; and an image display unit for displaying the 3D navigation image in real time.

According to still another aspect of the present invention, there is provided a navigation assistance device using 3D images, the device comprising: a communication unit for receiving AIS data from an automatic identification system, receiving ECDIS data from an electronic chart display and information system, and receiving radar data from a marine radar; a control unit for determining first ship information of a first ship boarded with a user and second ship information of a second ship arranged at a location adjacent to the first ship on the basis of the AIS data and the radar data, and determining environment information about a surrounding environment surrounding the first ship on the basis of the ECDIS data; a 3D image generation unit for generating a 3D navigation image that implements the first ship, the second ship, and the surrounding environment as 3D images on the basis of the first ship information, the second ship information, and the environment information; and an image display unit for displaying the 3D navigation image in real time.

## ADVANTAGEOUS EFFECTS

According to a navigation assistance device according to an embodiment of the present invention, as augmented reality images are generated based on the data provided by an automatic identification system and an electronic chart display and information system even when a target is difficult to identify as the quality of images obtained by photographing the ocean is poor, it is possible to effectively help safe navigation of navigators by allowing the navigators to recognize the augmented reality images.

In addition, according to a navigation assistance device according to another embodiment of the present invention, a ship in operation, other adjacent ships, and surrounding environments may be displayed as 3D images on the basis of only the data provided by the automatic identification system and the electronic chart display and information system.

In addition, according to a navigation assistance device according to still another embodiment of the present invention, it is possible to effectively help safe navigation of navigator by separately displaying ships that are likely to collide and sea routes through which the ships may move on a 3D navigation image.

## BRIEF DESCRIPTION OF THE DRAWINGS

FIG. 1 is a view showing a navigation assistance system according to an embodiment of the present invention.
FIG. 2 is a block diagram schematically showing a navigation assistance device according to an embodiment of the present invention.
FIGS. 3a to 3c are views showing an augmented reality navigation image displayed on a navigation assistance device according to an embodiment of the present invention.
FIG. 4 is a conceptual view for explaining the operation of a navigation assistance device according to another embodiment of the present invention.
FIG. 5 is a conceptual view for explaining the operation of a navigation assistance device according to still another embodiment of the present invention.
FIG. 6 is a block diagram schematically showing a navigation assistance device according to still another embodiment of the present invention.
FIGS. 7a to 7d are views showing a 3D navigation image displayed on a navigation assistance device according to still another embodiment of the present invention.
FIG. 8 is a view showing a navigation assistance system according to still another embodiment of the present invention.
FIG. 9 is a view showing a navigation assistance system according to still another embodiment of the present invention.

## BEST MODE FOR CARRYING OUT THE INVENTION

Specific structural or functional descriptions of the embodiments according to the concept of the present invention disclosed in this specification are only exemplified for the purpose of explaining the embodiments according to the concept of the present invention, and the embodiments according to the concept of the present invention may be implemented in various forms and are not limited to the embodiments described herein. In the embodiments disclosed in this specification, a 'module' or a 'unit' means a functional part that performs at least one function or operation, and may be implemented as hardware or software, or a combination of hardware and software.

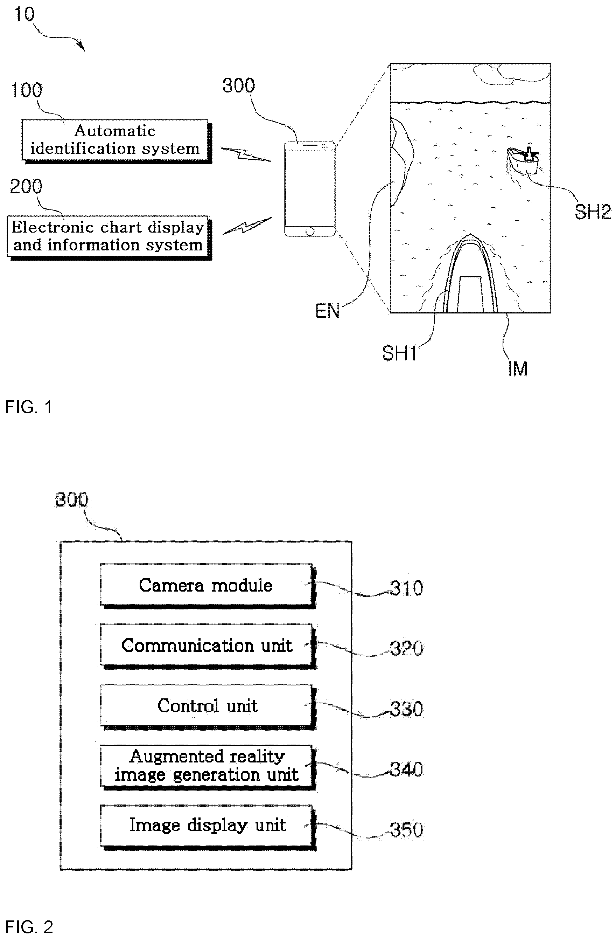

FIG. 1 is a view showing a navigation assistance system according to an embodiment of the present invention, and FIG. 2 is a block diagram schematically showing a navigation assistance device according to an embodiment of the present invention.

Referring to FIG. 1, a navigation assistance system 10 according to an embodiment of the present invention includes an automatic identification system 100, an electronic chart display and information system 200, and a navigation assistance device 300.

The automatic identification system (AIS) 100 is a device for automatically informing the position, speed, and moving direction of a ship to the surroundings, and may provide AIS data to the navigation assistance device 300. The AIS data includes first ship information of a first ship SH1 boarded with a user, and second ship information of a second ship SH2 arranged at a location adjacent to the first ship SH1. The first ship information includes the GPS coordinates, speed, and moving direction of the first ship SH1, and the second ship information includes the GPS coordinates, speed, and moving direction of the second ship SH2. A plurality of second ships SH2 may be positioned at a location adjacent to the first ship SH1, and in this case, the AIS data may include all second ship information of the plurality of second ships SH2.

The electronic chart display and information system (ECDIS) 200 is a navigation information system that supports navigators to plan and monitor sea routes and utilize additional information related to navigation by displaying real-time location information of ships. The electronic chart display and information system 200 may provide the navigation assistance device 300 with ECDIS data including all chart information related to navigation of the first ship SH1, such as coastlines, depth contours, water depths, sea route marks (lighthouses, light buoys), dangerous things, sea routes, and the like. For example, the ECDIS data may include coastline information, seabed topography, water depth, and the like of the areas surrounding the first ship SH1.

The navigation assistance device 300 may generate an augmented reality navigation image IM on the basis of a navigation image obtained by photographing outside the first ship SH1. First, the navigation assistance device 300 may receive AIS data from the automatic identification system 100, receive ECDIS data from the electronic chart display and information system, and implement the second ship SH2 and the surrounding environment EN as augmented reality images. Then, the navigation assistance device 300 may analyze the navigation image to generate an augmented reality navigation image IM in which the augmented reality images are overlapped on the location of the second ship SH2 and the location of the surrounding environment EN respectively in the navigation image.

According to embodiments, the navigation assistance device 300 may also generate an augmented reality navigation image by implementing only the second ship SH2 as an augmented reality image.

Since the augmented reality navigation image displayed on the navigation assistance device 300 is an image that displays ships, rocks, coastlines, dangerous things, and the like on an actual shooting screen obtained by photographing outside the first ship SH1 as an augmented reality image, the navigator may recognize a target through the augmented reality image although it is difficult to distinguish the target in the navigation image due to heavy rain, sea fog, or the like.

As another example, the navigation assistance device 3000 may receive AIS data from the automatic identification system 100, receive ECDIS data from the electronic chart display and information system, and generate a 3D navigation image IM that implements the first ship SH1, the second ship SH2, and the surrounding environment EN as 3D images. The navigation assistance device 3000 may determine the possibility of collision between the first ship SH1 and the second ship SH2, determine a sea route through which the first ship SH1 may move, and display a determination result on the 3D navigation image IM.

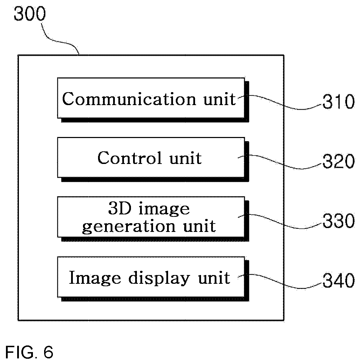

Here, although the 3D navigation image IM may be an image implementing all the objects included in the image, such as the first ship SH1, the second ship SH2, and the surrounding environment EN, as 3D images, it is not limited thereto, and it may be an augmented reality image in which the 3D images are combined with an image photographed by a separate camera installed in the first ship. That is, the 3D navigation image IM may be an image obtained by inserting the first ship SH1 and the second ship SH2 implemented as 3D images in an image obtained by photographing the sea on which the first ship SH1 is sailing. A navigation assistance device 3000 according to another example will be described with reference to FIG. 6.

According to embodiments, although the navigation assistance device 300 or 3000 may be any one among a personal computer (PC), a smart phone, a tablet PC, a mobile internet device (MID), an Internet tablet, an Internet of things (IoT) device, an Internet of everything (IoE) device, a desktop computer, a laptop computer, a workstation computer, a Wireless Broadband Internet (WiBro) terminal, and a Personal Digital Assistant (PDA), it is not limited thereto.

Referring to FIG. 2, the navigation assistance device 300 according to an embodiment of the present invention may include a camera module 310, a communication unit 320, a control unit 330, an augmented reality image generation unit 340, and an image display unit 350.

The camera module 310 may generate a navigation image by photographing outside the first ship SH1, and may insert a photographing direction in the navigation image when the navigation image is photographed. For example, when the camera module 310 photographs while facing the due south, the photographing direction may be recorded as due south and inserted in the navigation image.

In addition, the camera module 310 may determine an angle formed with the surface of the sea and insert the angle in the navigation image. For example, when the camera module 310 photographs while being inclined at an angle of 30° with respect to the surface of the sea, an angle value of 30° may be inserted in the navigation image.

Meanwhile, although the camera module 310 is shown as an internal configuration of the navigation assistance device 300 in FIG. 2, the camera module 310 may be a configuration implemented as a device separated from the navigation assistance device 300 to provide navigation images to the navigation assistance device 300. For example, the camera module 310 may be a camera device installed in the first ship SH1.

The communication unit 320 may be connected to the automatic identification system 100 and the electronic chart display and information system 200 through wired or wireless communication to receive AIS data and ECDIS data.

According to embodiments, the communication unit 320 may use short-range communication techniques such as Bluetooth, Radio Frequency Identification (RFID), infrared Data Association (IrDA), Ultra-Wideband (UWB), ZigBee, and the like, as well as wireless Internet communication such as Wireless LAN (WLAN), Wireless broadband (WiBro), World Interoperability for Microwave Access (Wimax), High Speed Downlink Packet Access (HSDPA), Wi-Fi, and the like, and it is not limited to any one communication method.

The control unit 330 may determine the first ship information including the GPS coordinates, position, moving direction (course), speed, length, width, shape, submerged depth in the water, and the like of the first ship SH1, and the second ship information including the GPS coordinates, position, moving direction, speed, length, width, shape, and the like of the second ship SH2 by analyzing the AIS data, and determine environmental information of the surrounding environment EN including coastlines, water depth, seabed topography, wind direction, wind speed, current speed, wave height, and the like by analyzing the ECDIS data.

The control unit 330 may receive the navigation image obtained by photographing outside the first ship SH1 from the camera module 310, and generate an augmented reality navigation image IM by overlapping the augmented reality image generated by the augmented reality image generation unit 340 on the navigation image.

The control unit 330 may determine the GPS coordinates of the first ship SH1 on the basis of the first ship information, and may set the GPS coordinates in the navigation image on the basis of the photographing direction received from the camera module 310.

For example, when it is determined that the GPS coordinates of the first ship SH1 are 35.092539 and 130.379864 and the photographing direction is due south, the longitude of the GPS coordinates of the navigation image includes a value smaller than 35.092539.

In addition, the control unit 330 may partition the navigation image into a plurality of regions, and individually determine a distance to each region in correspondence to the angle formed by each region with respect to the camera module and the surface of the sea. In addition, the control unit 330 may set the GPS coordinates in each region on the basis of the distance to each region from the first ship SH1 and the photographing direction. Here, when a plurality of GPS coordinates is included in one region, GPS coordinates of a median value among the plurality of GPS coordinates may be set as the representative GPS coordinates of the region.

The control unit 330 may select a first region having GPS coordinates matching the GPS coordinates of the second ship SH2 among the partitioned regions on the basis of the second ship information, and generate an augmented reality navigation image by overlapping the augmented reality image of the second ship SH2 on the first region in the navigation image.

In addition, the control unit 330 may select a second region having GPS coordinates matching the GPS coordinates of the surrounding environment among the regions partitioned based on the environment information, and generate an augmented reality navigation image by overlapping the augmented reality image of the surrounding environment on the second region in the navigation image.

According to embodiments, the control unit 330 may determine the possibility of collision between the first ship SH1 and the second ship SH2 on the basis of the first and second ship information, and the control unit 330 may determine the possibility of collision in the future according to the movement of the first and second ships SH1 and SH2, as well as the possibility of collision at the time point of analyzing the possibility of collision (hereinafter, referred to as 'first time point').

That is, when the first and second ships SH1 and SH2 respectively maintain the current speed and moving route after the first time point, the control unit 330 may predict the possibility of collision between the first and second ships SH1 and SH2. Here, the possibility of collision includes a case where the second ship SH2 approaches the first ship SH1 by less than a first reference distance, as well as a case of direct collision.

The control unit 330 may select a second ship SH2 that will approach the first ship SH1 by less than the first reference distance after the first time point, and determine the second ship SH2 as a collision risk ship.

For example, when the possibility of collision between the first ship SH1 moving in a first direction at a speed of 10 knots and the second ship SH2 moving in a second direction at a speed of 5 knots is determined at 14:00 (first time point) on June 15, 2020, the control unit 330 may determine the possibility of collision after the first time point, as well as the possibility of collision at the first time point. That is, the control unit 330 may determine the probability of collision after the first time point assuming that the first ship SH1 moves in the first direction at a speed of 10 knots and the second ship SH2 moves in the second direction at a speed of 5 knots after the first time point.

When the first reference distance is 3M and the control unit 330 predicts that the distance between the first ship SH1 and the second ship SH2 after the first time point will be within 3M, the control unit 330 may predict that the first and second the ships SH1 and SH2 will collide with each other, and determine the second ship SH2 as a collision risk ship.

Although the control unit 330 may determine the possibility of collision between the first ship SH1 and the second ship SH2 at every reference period, the possibility of collision may be determined at a period shorter than the reference period in correspondence to the distance between the first ship SH1 and the second ship SH2.

According to embodiments, when a first distance between the first ship SH1 and a ship closest to the first ship SH1 among a plurality of second ships SH2 at the first time point is equal to or greater than a second reference distance, the control unit 330 may determine a collision risk ship by analyzing the first and second ship information at every reference period.

On the other hand, when the first distance between the first ship SH1 and a ship closest to the first ship SH1 at the first time point is less than the second reference distance, the control unit 330 may determine a collision risk ship by analyzing the first and second ship information at a period shorter than the reference period.

For example, in the case where the second reference distance is 1km and the reference period is 5 seconds, when the second ship SH2 closest at the first time point is located at a distance of 3km, the control unit 330 may determine a collision risk ship by examining the possibility of collision every 5 seconds.

On the other hand, in the case where the second reference distance is 1km and the reference period is 5 seconds, when the second ship SH2 closest at the first time point is located at a distance of 800m, the control unit 330 may determine a collision risk ship by examining the possibility of collision every 3 seconds.

The control unit may display only the augmented reality image of the second ship selected among the plurality of second ships SH2 as a collision risk ship to be overlapped with the navigation image, and implement the other second ships as identification symbols and display the identification symbols on the augmented reality navigation image.

The augmented reality image generation unit 340 may generate an augmented reality navigation image, which implements the second ship SH2 and the surrounding environment EN as augmented reality images, on the basis of the first ship information, the second ship information, and the environment information.

Since the first and second ship information includes information on the type, length, and width of the first and second ships SH1 and SH2, the augmented reality image generation unit 340 may implement the second ship SH2 as an augmented reality image by using the first and second ship information. In addition, since the environment information includes information on the coastline and surrounding terrain, the augmented reality image generation unit 340 may implement the surrounding environment EN as an augmented reality image by using the environment information.

According to embodiments, the augmented reality image generation unit 340 may implement only collision risk ships among the plurality of second ships SH2 as augmented reality images. That is, when there is a plurality of second ships SH2 adjacent to the first ship SH1, the augmented reality image generation unit 340 may implement only the collision risk ships that are likely to collide with the first ship SH1 as augmented reality images, rather than implementing all the second ships SH2 as augmented reality images.

In addition, although the augmented reality image generation unit 340 may implement the ships other than the collision risk ships among the plurality of second ships SH2 as identification symbols, when the user desires to display the second ships SH2 marked with the identification symbols, the augmented reality image generation unit 340 may implement corresponding second ships SH2 as augmented reality images in response to the control of the user.

The image display unit 350 may display the augmented reality navigation image IM to the navigator, and although the image display unit 350 may be implemented as an organic light emitting display panel, a liquid crystal display panel, a plasma display panel, or the like, it is not limited thereto.

In addition, the image display unit 350 may include a touch screen, and may receive an input of touch, gesture, approach, or hovering by using an electronic pen or a part of the user's body.

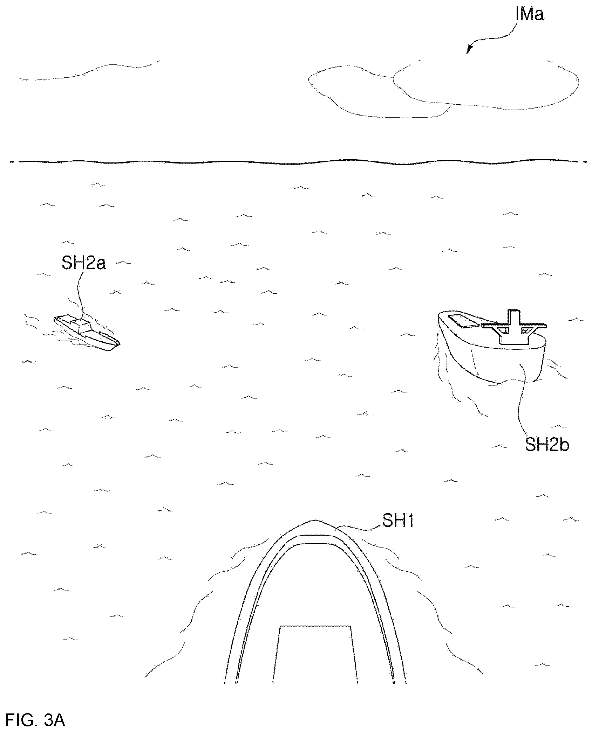

FIGS. 3a to 3c are views showing an augmented reality navigation image displayed on a navigation assistance device according to an embodiment of the present invention.

Referring to FIG. 3a, a navigation image IMa including a first ship SH1 boarded with the user of the navigation assistance device 300, and second ships SH2a and SH2b sailing at a location adjacent to the first ship (SH1) is shown.

Here, although the navigation image IMa means an image photographed by the camera module 310 embedded in the navigation assistance device 300, it is not limited thereto. It may be an image photographed by a camera device fixedly installed in the first ship SH1. In addition, although the first ship SH1 is displayed as being included in the navigation image IMa in FIG. 3a, it may or may not be included in the navigation image IMa according to the photographing direction of the navigation assistance device 300.

The navigation assistance device 300 may determine the orientation of the navigation image IMa by determining the photographing direction during photographing, and determine the angle formed by the camera module of the navigation assistance device 300 with the surface of the sea. For example, the navigation assistance device 300 may determine an angle formed by a line perpendicular to the lens surface of the camera module 310 with respect to the surface of the sea.

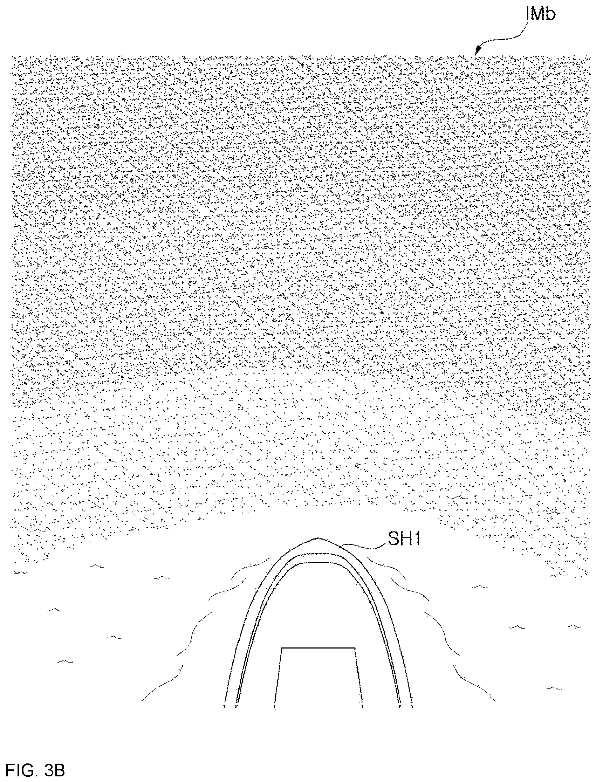

Referring to FIG. 3b, the navigation image IMb obtained by photographing outside the first ship SH1 in a situation in which the visible distance of the navigation assistance device 300 is very short due to operation at night, thick sea fog, heavy rain, or the like.

Although the navigation assistance device 300 may capture a navigation image of the external environment having a clear image quality when the weather is clear day and has a long visible distance, in a situation of a very short visible distance due to operation at night, thick sea fog, heavy rain, or the like, the navigation assistance device 300 may not properly photograph the external environment. Therefore, although the second ships SH2 and rocks are actually located around the first ship SH1, the navigation image IMb may not include the second ship SH2 and the surrounding environment EN.

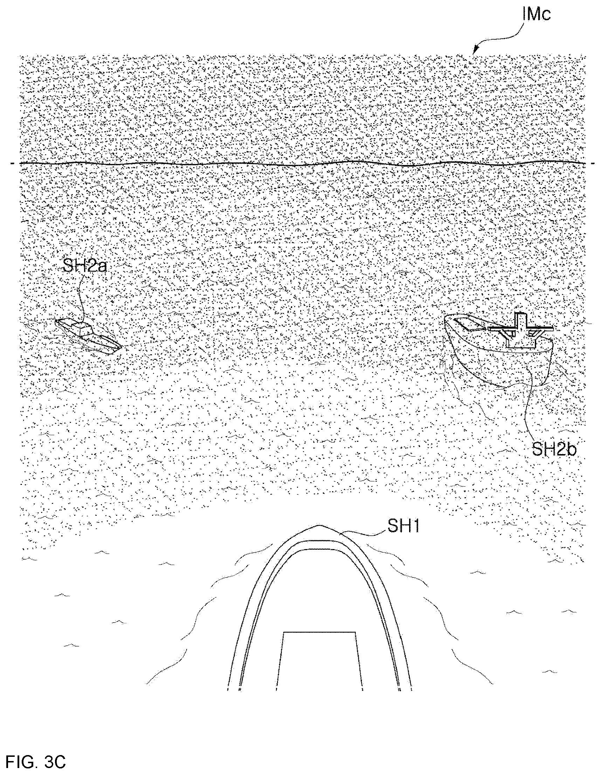

Referring to FIG. 3c, the navigation assistance device 300 may display the augmented reality navigation image IMc by overlapping the augmented reality image on the navigation image. In the augmented reality navigation image IMc, the second ships SH2a and sh2b may be displayed to be overlapped in correspondence to the locations of the ships.

Therefore, although the quality of the photographed navigation image is poor, and the second ships SH2a and sh2b and the surrounding environment EN are not displayed, the navigation assistance device 300 may display the augmented reality image to be overlapped with the navigation image so that the user may recognize the locations of the second ships SH2a and sh2b and the surrounding environment EN.

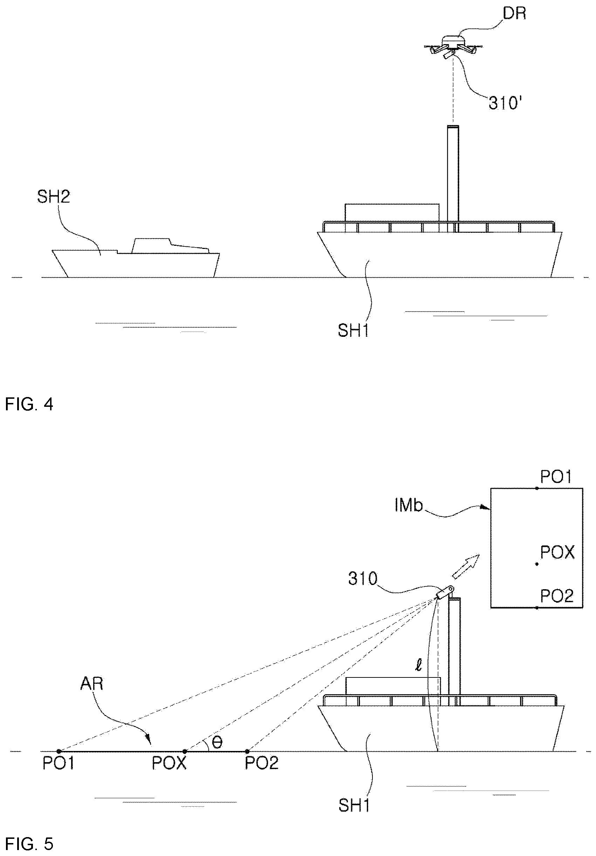

FIG. 4 is a conceptual view for explaining the operation of a navigation assistance device according to another embodiment of the present invention.

Referring to FIG. 4, a drone DR according to another embodiment of the present invention may fly above the first ship SH1 while being provided with a camera module 310'. The camera module 310' may generate a navigation image by photographing outside the first ship SH1, such as the second ship SH2, the surrounding environment EN, and the like, above the first ship SH1.

Although the drone DR may transmit the navigation image photographed by the camera module 310' by performing wireless communication with the navigation assistance device 300 located in the first ship SH1, it is not limited thereto, and the camera module 310' itself may transmit the photographed navigation image by performing wireless communication with the navigation assistance device 300.

The drone DR may perform a flight operation in response to a control signal received from the navigation assistance device 300 through wireless communication. That is, the drone DR may control flight altitude, flight speed, flight direction, horizontal rotation movement, and the like in response to the control signal, and the camera module 310' provided in the drone DR may change the photographing direction and the photographing range in response to the movement of the drone DR.

According to embodiments, the drone DR may include a separate GPS module to measure and provide GPS coordinates of the drone DR to the navigation assistance device 300 in real time, and the navigation assistance device 300 may set GPS coordinates in the navigation image on the basis of the GPS coordinates of the first ship SH1 in consideration of the GPS coordinates of the drone DR and the GPS coordinates of the first ship SH1.

FIG. 5 is a conceptual view for explaining the operation of a navigation assistance device according to still another embodiment of the present invention.

Referring to FIG. 5, the navigation assistance device 300 may determine a distance and a direction of each region separated from the first ship SH1 in the navigation image while capturing the navigation image.

When the camera module 310 of the navigation assistance device 300 photographs the sea between a first point PO1 and a second point PO2, the top of the navigation image IMb may include an image of the first point PO1, and the bottom may include an image of the second point PO2.

As the navigation assistance device 300 separately includes a gyro sensor, an acceleration sensor, or the like, it may calculate the angle $\theta$ at a third point POX where the line perpendicular to the lens surface of the camera module 310 meets the surface of the sea. In addition, since the navigation assistance device 300 may calculate the height I from the surface of the sea on the basis of the first ship information, the distance x to the third point POX may be calculated by Equation 1 shown below.

$$x = \frac{l}{tan\theta}$$

In addition, the navigation assistance device 300 may calculate the distances to the other points on the basis of the distance x to the third point POX. At this point, the navigation assistance device 300 may calculate the distances to the first and second points PO1 and PO2 in correspondence to the light angle of the camera module 310.

When the navigation image IMb is partitioned into a plurality of regions, the navigation assistance device 300 may calculate a center distance of each region in correspondence to an image ratio, and set a representative distance of each region.

FIG. 6 is a block diagram schematically showing a navigation assistance device according to still another embodiment of the present invention.

Referring to FIG. 6, the navigation assistance device 3000 according to another embodiment of the present invention may include a communication unit 3100, a control unit 3200, a 3D image generation unit 3300, and an image display unit 3400.

The communication unit 3100 may be connected to the automatic identification system 100 and the electronic chart display and information system 200 through wired or wireless communication to receive AIS data and ECDIS data.

According to embodiments, the communication unit 3100 may use short-range communication techniques such as Bluetooth, Radio Frequency Identification (RFID), infrared Data Association (IrDA), Ultra-Wideband (UWB), ZigBee, and the like, as well as wireless Internet communication such as Wireless LAN (WLAN), Wireless broadband (WiBro), World Interoperability for Microwave Access (Wimax), High Speed Downlink Packet Access (HSDPA), Wi-Fi, and the like, and it is not limited to any one communication method.

The control unit 3200 may determine the first ship information including the position, moving direction (course), speed, length, width, shape, submerged depth in the water, and the like of the first ship SH1, and the second ship information including the position, moving direction, speed, length, width, shape, and the like of the second ship SH2 by analyzing the AIS data, and determine environmental information of the surrounding environment EN including coastlines, water depth, seabed topography, wind direction, wind speed, current speed, wave height, and the like by analyzing the ECDIS data.

Although there may be a plurality of second ships SH2 adjacent to the first ship SH1, the first ship SH1 may analyze only the second ship information about the second ship SH2 located within a predetermined distance, and may not consider the second ship information about the other second ships SH2.

The control unit 3200 may determine the possibility of collision between the first ship SH1 and the second ship SH2 on the basis of the analyzed information and the first and second ship information, and the control unit 330 may determine the possibility of collision in the future according to the movement of the first and second ships SH1 and SH2, as well as the possibility of collision at the time point of analyzing the possibility of collision (hereinafter, referred to as 'first time point').

That is, when the first and second ships SH1 and SH2 respectively maintain the current speed and moving route after the first time point, the control unit 3200 may predict the possibility of collision between the first and second ships SH1 and SH2. Here, the possibility of collision includes a case where the second ship SH2 approaches the first ship SH1 by less than a first reference distance, as well as a case of direct collision.

The control unit 3200 may select a second ship SH2 that will approach the first ship SH1 by less than the first reference distance after the first time point, and determine the second ship SH2 as a collision risk ship.

For example, when the possibility of collision between the first ship SH1 moving in a first direction at a speed of 10 knots and the second ship SH2 moving in a second direction at a speed of 5 knots is determined at 14:00 (first time point) on June 15, 2020, the control unit 3200 may determine the possibility of collision after the first time point, as well as the possibility of collision at the first time point. That is, the control unit 3200 may determine the probability of collision after the first time point assuming that the first ship SH1 moves in the first direction at a speed of 10 knots and the second ship SH2 moves in the second direction at a speed of 5 knots after the first time point.

When the first reference distance is 3M and the control unit 3200 predicts that the distance between the first ship SH1 and the second ship SH2 after the first time point will be within 3M, the control unit 330 may predict that the first and second the ships SH1 and SH2 will collide with each other, and determine the second ship SH2 as a collision risk ship.

Although the control unit 3200 may determine the possibility of collision between the first ship SH1 and the second ship SH2 at every reference period, the possibility of collision may be determined at a period shorter than the reference period in correspondence to the distance between the first ship SH1 and the second ship SH2.

According to embodiments, when a first distance between the first ship SH1 and a ship closest to the first ship SH1 among a plurality of second ships SH2 at the first time point is equal to or greater than a second reference distance, the control unit 3200 may determine a collision risk ship by analyzing the first and second ship information at every reference period.

On the other hand, when the first distance between the first ship SH1 and a ship closest to the first ship SH1 at the first time point is less than the second reference distance, the control unit 3200 may determine a collision risk ship by analyzing the first and second ship information at a period shorter than the reference period.

For example, in the case where the second reference distance is 1km and the reference period is 5 seconds, when the second ship SH2 closest at the first time point is located at a distance of 3km, the control unit 3200 may determine a collision risk ship by examining the possibility of collision every 5 seconds.

On the other hand, in the case where the second reference distance is 1km and the reference period is 5 seconds, when the second ship SH2 closest at the first time point is located at a distance of 800m, the control unit 3200 may determine a collision risk ship by examining the possibility of collision every 3 seconds.

The 3D image generation unit 3300 may generate a 3D navigation image that implements the first ship SH1, the second ship SH2, and the surrounding environment EN as 3D images on the basis of the first ship information, the second ship information, and the environment information.

Since the first and second ship information includes information on the type, length, and width of the first and second ships SH1 and SH2, the 3D image generation unit 3300 may implement the first ship SH1 and the second ship SH2 as 3D images by using the first and second ship information. In addition, since the environment information includes information on the coastline and surrounding terrain, the 3D image generation unit 3300 may implement the surrounding environment EN as a 3D image by using the environment information.

At this point, although the 3D image generation unit 3300 may implement the second ship SH2 and the surrounding environment EN around the first ship SH1 as 3D images in consideration of the first distance between the first ship SH1 and the second ship SH2 and the distance between the first ship SH1 and the surrounding environment EN, the 3D image generation unit 3300 may also implement the first ship SH1 and the surrounding environment EN around the second ship SH2, or implement the first ship SH1, the second ship SH2, and the surrounding environment EN around an arbitrary time point according to a user's control.

According to embodiments, the 3D image generation unit 3300 may generate a 3D navigation image IIM by implementing only collision risk ships among a plurality of second ships SH2 as 3D images. That is, when there is a plurality of second ships SH2 adjacent to the first ship SH1, the 3D image generation unit 3300 may generate a 3D navigation image IIM by implementing only collision risk ships that are likely to collide the first ship SH1 as 3D images, rather than implementing all the second ships SH2 as 3D images.

In addition, although the 3D image generation unit 3300 may generate a 3D navigation image IIM by implementing the ships other than the collision risk ships among the plurality of second ships SH2 as identification symbols, when the user desires to display the second ships SH2 marked with the identification symbols, the 3D image generation unit 3300 may display the corresponding second ships SH2 implemented as 3D images in response to the control of the user.

In addition, the control unit 3200 may determine a first sea route through which the first ship SH1 may move without collision by comparing and analyzing the submerged depth in the water of the first ship SH1 included in the first ship information, width information of the first ship SH1, and depth information of the water included in the environment information.

The 3D image generation unit 3300 may provide assistance to the navigator when operating the ship by generating a 3D navigation image IIM in a way of displaying the first sea route and other regions in colors distinguished from each other on the basis of the determination result of the control unit 3200.

The image display unit 3400 may display the 3D navigation image IIM to the navigator, and although the image display unit 3400 may be implemented as an organic light emitting display panel, a liquid crystal display panel, a plasma display panel, or the like, it is not limited thereto.

In addition, the image display unit 3400 may include a touch screen, and may receive an input of touch, gesture, approach, or hovering by using an electronic pen or a part of the user's body.

Here, although the sea route through which the ship may move may be different for each ship as the submerged depth in the water of the ship may vary depending on the type, width, weight, and the like of the ship, according to the navigation assistance device 3000 according to an embodiment of the present invention, a sea route through which a ship may move may be separately displayed in consideration of the width and the submerged depth in the water of the ship, rather than displaying a sea route, through which any ship may move, to all the ships in the same way.

In addition, according to the navigation assistance device 3000 according to an embodiment of the present invention, collision risk ships are displayed as 3D images, the other ships are displayed only as identification symbols, and sea routes through which the ships may move are displayed in colors distinguished from other areas, so that navigators may intuitively recognize them for safe navigation.

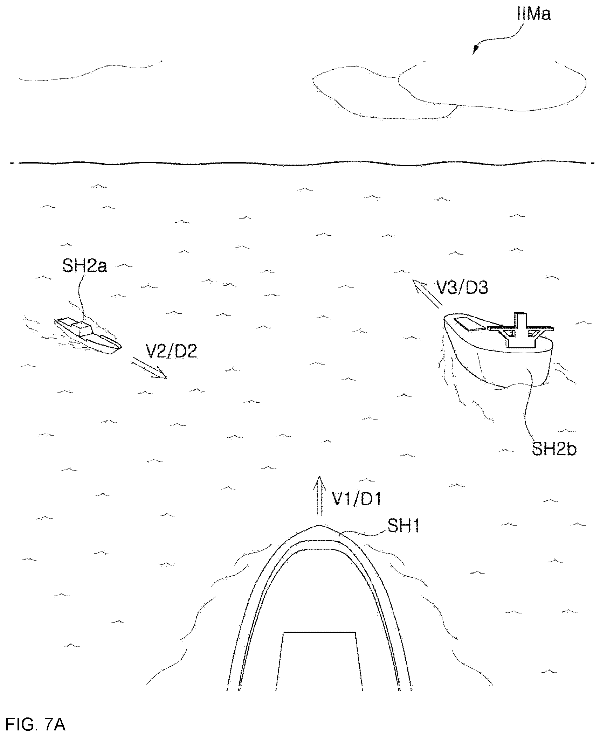

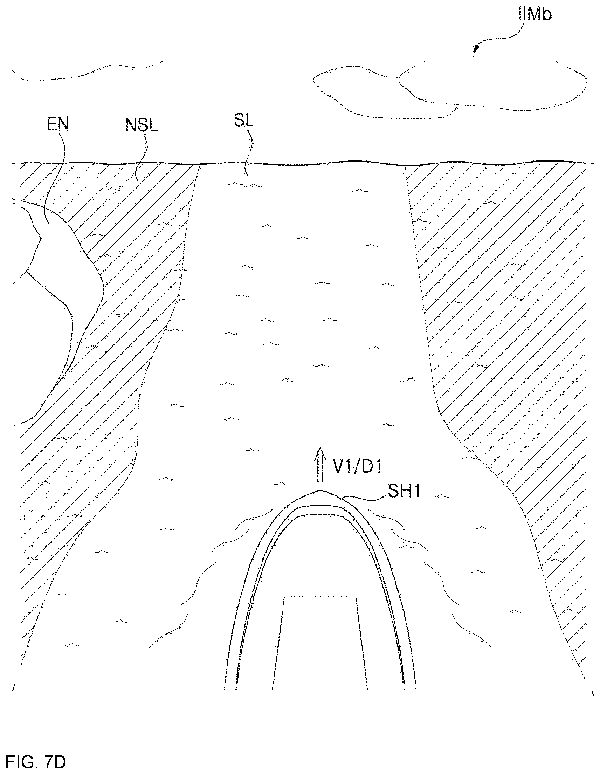

FIGS. 7a to 7d are views showing a 3D navigation image displayed on a navigation assistance device according to still another embodiment of the present invention.

The 3D navigation images IIMa, IIMa', IIMa", and IIMb shown in FIGS. 7a to 7d are shown for convenience of explanation of the present invention, and the function of the navigation assistance device 3000 according to an embodiment of the present invention is not limited by the presented 3D navigation images.

Referring to FIG. 7a, a first ship SH1 sailing on the surface of the water and second ships SH2a and SH2b sailing at locations adjacent to the first ship SH1 are shown. Since the user of the navigation assistance device 3000 is on board the first ship SH1, basically, the navigation assistance device 3000 may display the second ships SH2a and SH2b around the first ship SH1.

The first ship SH1 and the second ships SH2a and SH2b are implemented as 3D images with reference to the type, width, and length of the ships included in the first and second ship information, and the size of each of the second ships SH2a and SH2b is generated based on the actual size of the ship, and is displayed in a reduced form in correspondence to the distance from the first ship SH1.

The navigation assistance device 3000 may determine the possibility of collision between the first ship SH1 and the second ships SH2a and SH2b by determining the speed and moving direction of the first ship SH1 and determining the speed and moving direction of the second ships SH2a and SH2b.

When the second ships SH2a and SH2b exist within a predetermined distance from the first ship SH1, the navigation assistance device 3000 may determine collision risk ships in consideration of the speed and moving route of each ship.

For example, when the first ship SH1 moves along a first direction D1 at a first speed V1, and the 2a second ship SH2a moves along a second direction D2 at a second speed V2, and the 2b second ship SH2b moves along a third direction D3 at a third speed V3, the navigation assistance device 3000 may predict the possibility of collision between the first ship SH1 and the second ships SH2a and SH2b.

When the 2a second ship SH2a is expected to approach the first ship SH1 by less than the first reference distance after a predetermined period of time from the current time point (the first time point), the navigation assistance device 3000 may determine the 2a second ship SH2a as a collision risk ship at the first time point. On the other hand, when it is unlikely that the 2b second ship SH2b approaches the first ship SH1 by less than the first reference distance even after a predetermined period of time from the first time point, the 2b second ship SH2b may be determined as a ship without a risk of collision at the first time point.

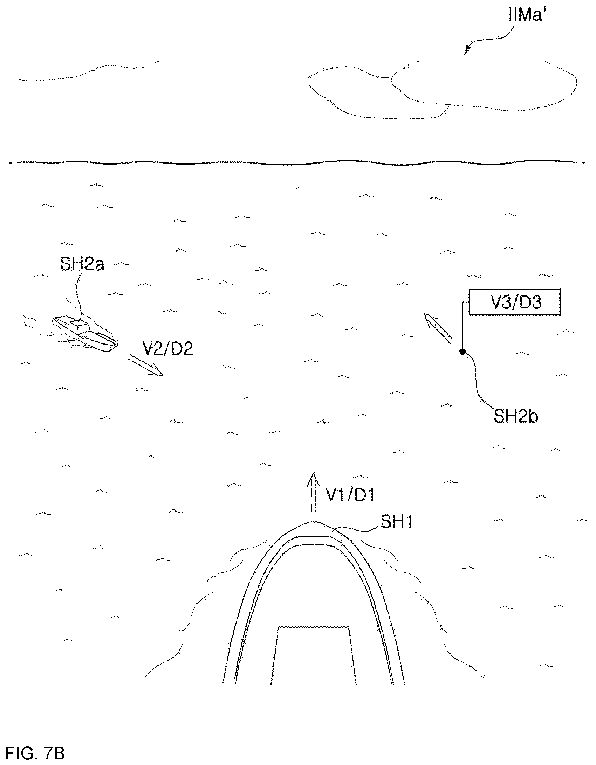

Referring to FIG. 7b, the navigation assistance device 3000 may display only the first ship SH1 and the collision risk ship as 3D images together with the surrounding environment on the image display unit 3400 at the first time point, and a ship without a collision risk may be displayed as an identifier.

When all the ships are displayed on the navigation assistance device 3000 at the same time, although it is difficult for the navigator to intuitively determine which ships are at the risk of collision, the navigator may effectively prepare for the risk of collision by recognizing only the collision risk ships displayed on the navigation assistance device 3000 as 3D images.

An identification symbol, such as a point, circle, square, triangle, or the like, may be displayed at the location of a ship without a risk of collision, and when the user desires to see a corresponding ship in detail, the user may switch the display to a 3D image through handling such as touching the identification symbol.

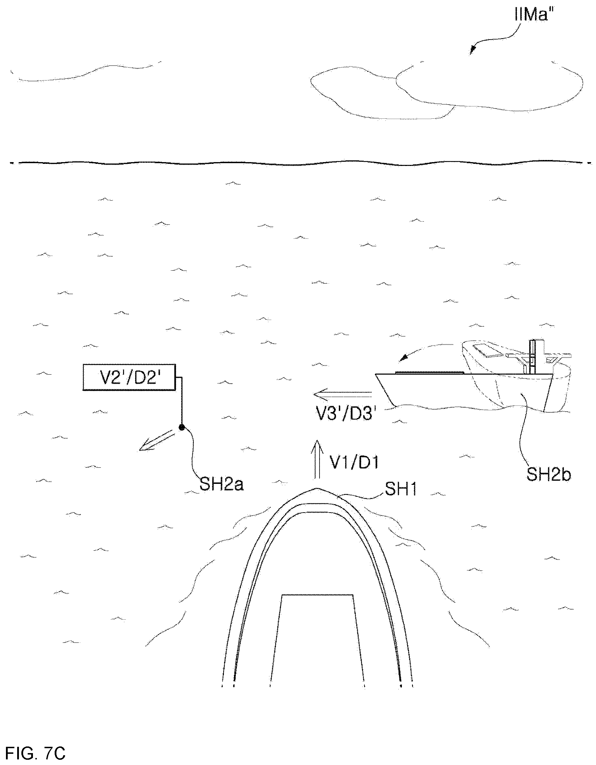

Referring to FIG. 7c, the navigation assistance device 3000 may determine a collision risk ship at every reference period. When a second time point arrives as the reference period has elapsed after the first time point, the navigation assistance device determines again the possibility of collision of the second ships SH2a and SH2b existing within a predetermined distance from the first ship SH1.

When it is determined that there is no possibility of collision after the second time point as the speed and moving direction of at least one among the first ship SH1 and the 2a second ship SH2a have been changed, the navigation assistance device 3000 may display the 2a second ship SH2a as an identification symbol.

On the contrary, when it is determined that there is a possibility of collision after the second time point as the speed and moving direction of at least one among the first ship SH1 and the second ship SH2b have been changed, the navigation assistance device 3000 may display the second ship SH2b as a 3D image.

Although the period for determining the possibility of collision by the navigation assistance device 3000 follows the reference period set by the user, it may be shorter or longer according to the distance between the first ship SH1 and the second ships SH2a and SH2b.

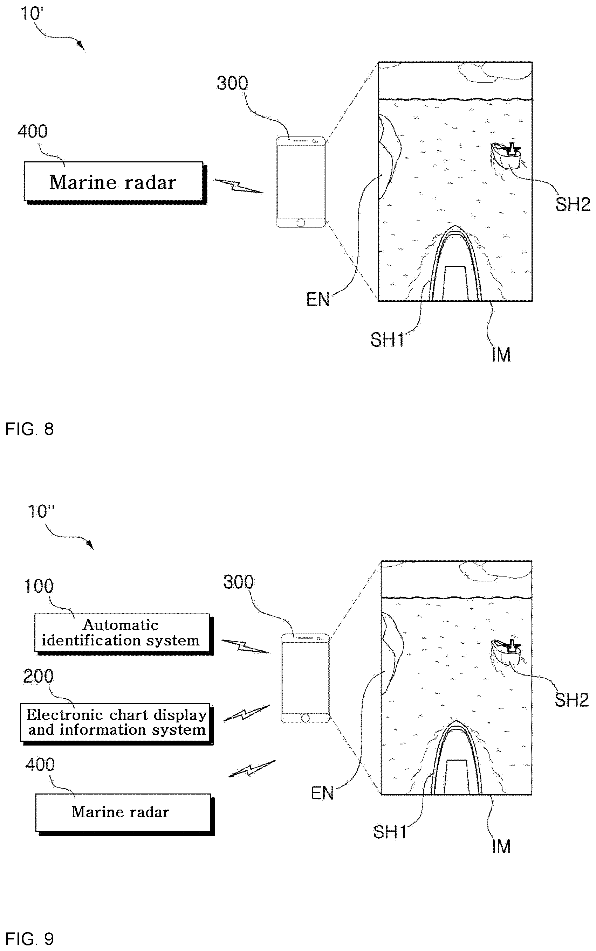

Referring to FIG. 8, the navigation assistance device 3000 may determine a first sea route SL through which the first ship SH1 may move without collision by comparing and analyzing the submerged depth in the water of the first ship SH1 included in the first ship information, width information of the first ship SH1, and depth information of the water included in the environment information.

The 3D image generation unit may provide assistance to the navigator when operating the ship by generating a 3D navigation image in a way of displaying the first sea route SL, impassable sea areas NSL, and other regions in colors distinguished from each other on the basis of the determination result of the control unit 3200.

In addition, the navigation assistance device 3000 may provide a warning message to the navigator when the first ship SH1 is sailing out of the first sea route SL.

In this way, as passable sea routes and impassable routes are separately displayed on the 3D navigation image, the navigation assistance device 3000 according to an embodiment of the present invention may effectively help a navigator to safely navigate.

FIG. 8 is a view showing a navigation assistance system according to still another embodiment of the present invention.

Referring to FIG. 8, the navigation assistance system 10' according to another embodiment of the present invention includes a marine radar 400 and a navigation assistance device 3000.

The marine radar 400 is a device for tracking and detecting ships, marine structures, and the like located at a distance, and may measure the distance using the time of radio waves output from the marine radar 400 and reflected and returned from a target. The marine radar 400 may generate and provide radar data to the navigation assistance device 3000, and the radar data may include first ship information of the first ship SH1 boarded with a user and second ship information of the second ship SH2 arranged at a location adjacent to the first ship SH1. The first ship information includes the speed and moving direction of the first ship SH1, and the second ship information includes the speed and moving direction of the second ship SH2.

The navigation assistance device 3000 may receive radar data from the marine radar 400, and generate a 3D navigation image IIM that implements the first ship SH1, the second ship SH2, and the surrounding environment EN as 3D images. The navigation assistance device 3000 may determine the possibility of collision between the first ship SH1 and the second ship SH2, determine a sea route through which the first ship SH1 may move, and display a determination result on the 3D navigation image IIM.

Here, although the 3D navigation image IIM may be an image implementing all the objects included in the image, such as the first ship SH1, the second ship SH2, and the surrounding environment EN, as 3D images, it is not limited thereto, and it may be an augmented reality image in which the 3D images are combined with an image photographed by a separate camera installed in the first ship. That is, the 3D navigation image IIM may be an image obtained by inserting the first ship SH1 and the second ship SH2 implemented as 3D images in an image obtained by photographing the sea on which the first ship SH1 is sailing.

FIG. 9 is a view showing a navigation assistance system according to still another embodiment of the present invention.

Referring to FIG. 9, a navigation assistance system 10" according to still another embodiment of the present invention includes an automatic identification system 100, an electronic chart display and information system 200, a marine radar 400, and a navigation assistance device 300 or 3000.

The automatic identification system 100 may provide AIS data to the navigation assistance device 300 or 3000. The AIS data includes first ship information of the first ship SH1 boarded with a user, and second ship information of the second ship SH2 arranged at a location adjacent to the first ship SH1. The first ship information includes the speed and moving direction of the first ship SH1, and the second ship information includes the speed and moving direction of the second ship SH2.

The electronic chart display and information system 200 may provide the navigation assistance device 300 or 300 with ECDIS data including all chart information related to navigation of the first ship SH1, such as coastlines, depth contours, water depths, sea route marks (lighthouses, light buoys), dangerous things, sea routes, and the like. For example, the ECDIS data may include coastline information, seabed topography, water depth, and the like of the areas surrounding the first ship SH1.

The marine radar 400 may generate and provide radar data to the navigation assistance device 300 or 3000, and the radar data may include first ship information of the first ship SH1 boarded with a user and second ship information of the second ship SH2 arranged at a location adjacent to the first ship SH1. The first ship information includes the speed and moving direction of the first ship SH1, and the second ship information includes the speed and moving direction of the second ship SH2.

When the navigation assistance system 10" includes the navigation assistance device 300 according to the embodiment of FIG. 2, the navigation assistance device 300 may generate an augmented reality navigation image IM, which implements the second ship SH2 as an augmented reality image using the AIS data and radar data, and implements the surrounding environment EN as an augmented reality image using the ECDIS data.

When the navigation assistance system 10" includes the navigation assistance device 3000 according to the embodiment of FIG. 6, the navigation assistance device 3000 may generate a 3D navigation image IIM that implements the first ship SH1 and the second ship SH2 as 3D images using the AIS data and radar data, and implements the surrounding environment EN as a 3D image using the ECDIS data. The navigation assistance device 3000 may determine the possibility of collision between the first ship SH1 and the second ship SH2, determine a sea route through which the first ship SH1 may move, and display a determination result on the 3D navigation image IIM.

Here, although the 3D navigation image IIM may be an image implementing all the objects included in the image, such as the first ship SH1, the second ship SH2, and the surrounding environment EN, as 3D images, it is not limited thereto, and it may be an augmented reality image in which the 3D images are combined with an image photographed by a separate camera installed in the first ship. That is, the 3D navigation image IIM may be an image obtained by inserting the first ship SH1 and the second ship SH2 implemented as 3D images in an image obtained by photographing the sea on which the first ship SH1 is sailing.

Although the embodiments of the present invention have been described above, it is understood that those skilled in the art may make various modifications without departing from the scope of the claims of the present invention.

The modes for implementing the present invention have been described together in the best mode for implementing the present invention.

## INDUSTRIAL APPLICABILITY

According to the navigation assistance device according to an embodiment of the present invention, safety of navigation can be enhanced by displaying a ship in operation, other adjacent ships, and surrounding environments in augmented reality or 3D images.

## Claims

1. A navigation assistance device using an augmented reality image, the device comprising:

   a communication unit(320) for receiving AIS data from an automatic identification system(AIS);
   a control unit(330) for generating an augmented reality navigation image, by determining first ship information of a first ship boarded with a user and second ship information of a second ship arranged at a location adjacent to the first ship on the basis of the AIS data, and receiving a navigation image obtained by photographing outside the first ship from a camera module(310);
   an augmented reality image generation unit(340) for generating the second ship as a first augmented reality image on the basis of the first ship information and the second ship information;
   and an image display unit(350) for displaying the augmented reality navigation image, wherein the first ship information includes GPS coordinates, speed, and moving direction of the first ship, and the second ship information includes GPS coordinates, speed, and moving direction of the second ship, the control unit(330) generates the augmented reality navigation image by analyzing the navigation image and overlapping the first augmented reality image at a location of the second ship in the navigation image, the control unit(330) receives a photographing direction from the camera module(310) and determines an orientation of the navigation image, determines GPS coordinates of the first ship on the basis of the first ship information, and sets GPS coordinates in the navigation image on the basis of the GPS coordinates of the first ship, and the control unit(330) partitions the navigation image into a plurality of regions, determines a distance to each region in correspondence to an angle formed by each region with respect to the camera module(310) and the surface of the sea, and sets GPS coordinates in each of the regions in correspondence to the determined distance and the direction.

2. The device according to claim 1, wherein the control unit(330) selects a first region having GPS coordinates matching the GPS coordinates of the second ship among the regions, and generates the augmented reality navigation image by overlapping the first augmented reality image on the first region.

3. The device according to claim 1, wherein the communication unit(320) receives ECDIS data from an electronic chart display and information system, the control unit(330) determines environment information about a surrounding environment on the basis of the ECDIS data, the augmented reality image generation unit(340) generates the surrounding environment as a second augmented reality image on the basis of the environment information, and the control unit(330) generates the augmented reality navigation image by analyzing the navigation image and overlapping the second augmented reality image at a location of the surrounding environment in the navigation image.

4. The device according to claim 1, wherein the control unit(330) analyzes the first and second ship information at a first time point, selects a second ship that will be adjacent to the first ship by less than a first reference distance after the first time point when a moving route and a speed of each ship are maintained, and determines the selected second ship as a collision risk ship.

5. The device according to claim 4, wherein the control unit(330) displays only the first augmented reality image of the second ship selected among a plurality of second ships as a collision risk ship to be overlapped with the navigation image.

6. The device according to claim 5, wherein the control unit(330) implements the other ships among the plurality of second ships as identification symbols and displays the identification symbols on the augmented reality navigation image.

7. A navigation assistance device using an augmented reality image, the device comprising:

   a communication unit(320) for receiving radar data from a marine radar;
   a control unit(330) for generating an augmented reality navigation image, by determining first ship information of a first ship boarded with a user and second ship information of a second ship arranged at a location adjacent to the first ship on the basis of the radar data, and receiving a navigation image obtained by photographing outside the first ship from a camera module(310);
   an augmented reality image generation unit(340) for generating the second ship as a first augmented reality image on the basis of the first ship information and the second ship information;
   and an image display unit(350) for displaying the augmented reality navigation image, wherein the first ship information includes GPS coordinates, speed, and moving direction of the first ship, and the second ship information includes GPS coordinates, speed, and moving direction of the second ship, the control unit(330) generates the augmented reality navigation image by analyzing the navigation image and overlapping the first augmented reality image at a location of the second ship in the navigation image, the control unit(330) receives a photographing direction from the camera module(310) and determines an orientation of the navigation image, determines GPS coordinates of the first ship on the basis of the first ship information, and sets GPS coordinates in the navigation image on the basis of the GPS coordinates of the first ship, and the control unit(330) partitions the navigation image into a plurality of regions, determines a distance to each region in correspondence to an angle formed by each region with respect to the camera module(310) and the surface of the sea, and sets GPS coordinates in each of the regions in correspondence to the determined distance and the direction.

## Patentansprüche

1. Navigationsassistenzvorrichtung unter Verwendung eines Augmented-Reality-Bilds, wobei die Vorrichtung umfasst:

   eine Kommunikationseinheit (320) zum Empfangen von AIS-Daten von einem automatischen Identifikationssystem (AIS);
   eine Steuereinheit (330) zum Erzeugen eines Augmented-Reality-Navigationsbilds, durch Bestimmen von ersten Schiffsinformationen eines ersten Schiffs mit einem Benutzer an Board und zweiten Schiffsinformationen eines zweiten Schiffs, das an einem zu dem ersten Schiff benachbarten Ort angeordnet ist, auf der Basis der AIS-Daten, und Empfangen eines durch Fotografieren außerhalb des ersten Schiffs erhaltenen Navigationsbilds von einem Kameramodul (310);
   eine Augmented-Reality-Bilderzeugungseinheit (340) zum Erzeugen des zweiten Schiffs als ein erstes Augmented-Reality-Bild auf der Basis der ersten Schiffsinformationen und der zweiten Schiffsinformationen;
   und eine Bildanzeigeeinheit (350) zum Anzeigen des Augmented-Reality-Navigationsbilds, wobei die ersten Schiffsinformationen GPS-Koordinaten, Geschwindigkeit und Bewegungsrichtung des ersten Schiffs umfassen, und die zweiten Schiffsinformationen GPS-Koordinaten, Geschwindigkeit und Bewegungsrichtung des zweiten Schiffs umfassen, die Steuereinheit (330) das Augmented-Reality-Navigationsbild durch Analysieren das Navigationsbilds und Überlappen des ersten Augmented-Reality-Bilds an einem Ort des zweiten Schiffs in dem Navigationsbild erzeugt,
   die Steuereinheit (330) eine Fotografierrichtung von dem Kameramodul (310) empfängt und eine Ausrichtung des Navigationsbilds bestimmt, GPS-Koordinaten des ersten Schiffs auf der Basis der ersten Schiffsinformationen bestimmt, und GPS-Koordinaten in dem Navigationsbild auf der Basis der GPS-Koordinaten des ersten Schiffs einstellt, und die Steuereinheit (330) das Navigationsbild in eine Vielzahl von Regionen unterteilt, einen Abstand zu jeder Region in Übereinstimmung mit einem durch jede Region in Bezug auf das Kameramodul (310) und die Oberfläche des Meeres gebildeten Winkel bestimmt, und GPS-Koordinaten in jeder der Regionen in Übereinstimmung mit dem bestimmten Abstand und der Richtung einstellt.

2. Vorrichtung nach Anspruch 1, wobei die Steuereinheit (330) eine erste Region, die GPS-Koordinaten aufweist, die mit den GPS-Koordinaten des zweiten Schiffs übereinstimmen, unter den Regionen auswählt, und das Augmented-Reality-Navigationsbild durch Überlappen des ersten Augmented-Reality-Bilds auf der ersten Region erzeugt.

3. Vorrichtung nach Anspruch 1, wobei die Kommunikationseinheit (320) ECDIS-Daten von einem elektronischen Kartenanzeige- und Informationssystem (*electronic chart display and information system*) empfängt, die Steuereinheit (330) Umweltinformationen über eine umgebende Umwelt auf der Basis der ECDIS-Daten bestimmt, die Augmented-Reality-Bilderzeugungseinheit (340) die umgebende Umwelt als ein zweites Augmented-Reality-Bild auf der Basis der Umweltinformationen erzeugt, und die Steuereinheit (330) durch Analysieren des Navigationsbilds und Überlappen des zweiten Augmented-Reality-Bilds an einem Ort der umgebenden Umwelt in dem Navigationsbild das Augmented-Reality-Navigationsbild erzeugt.

4. Vorrichtung nach Anspruch 1, wobei die Steuereinheit (330) die ersten und zweiten Schiffsinformationen zu einem ersten Zeitpunkt analysiert, ein zweites Schiff auswählt, das nach dem ersten Zeitpunkt zu dem ersten Schiff um weniger als ein erster Referenzabstand benachbart ist, wenn eine Bewegungsroute und eine Geschwindigkeit jedes Schiffs aufrechterhalten werden, und das ausgewählte zweite Schiff als ein Schiff mit Kollisionsrisiko bestimmt.

5. Vorrichtung nach Anspruch 4, wobei die Steuereinheit (330) nur das erste Augmented-Reality-Bild des unter einer Vielzahl von zweiten Schiffen als ein Schiff mit Kollisionsrisiko ausgewählten zweiten Schiffs anzeigt, um mit den Navigationsbild überlappt zu sein.

6. Vorrichtung nach Anspruch 5, wobei die Steuereinheit (330) die anderen Schiffe unter der Vielzahl von zweiten Schiffen als Identifikationssymbole implementiert und die Identifikationssymbole auf dem Augmented-Reality-Navigationsbild anzeigt.

7. Navigationsassistenzvorrichtung unter Verwendung eines Augmented-Reality-Bilds, wobei die Vorrichtung umfasst:

eine Kommunikationseinheit (320) zum Empfangen von Radardaten von einem Marineradar; eine Steuereinheit (330) zum Erzeugen eines Augmented-Reality-Navigationsbilds, durch Bestimmen von ersten Schiffsinformationen eines ersten Schiffs mit einem Benutzer an Board und zweiten Schiffsinformationen eines zweiten Schiffs, das an einem zu dem ersten Schiff benachbarten Ort angeordnet ist, auf der Basis der Radardaten, und Empfangen eines durch Fotografieren außerhalb des ersten Schiffs erhaltenen Navigationsbilds von einem Kameramodul (310);
eine Augmented-Reality-Bilderzeugungseinheit (340) zum Erzeugen des zweiten Schiffs als ein erstes Augmented-Reality-Bild auf der Basis der ersten Schiffsinformationen und der zweiten Schiffsinformationen;
und eine Bildanzeigeeinheit (350) zum Anzeigen des Augmented-Reality-Navigationsbilds, wobei die ersten Schiffsinformationen GPS-Koordinaten, Geschwindigkeit und Bewegungsrichtung des ersten Schiffs umfassen, und die zweiten Schiffsinformationen GPS-Koordinaten, Geschwindigkeit und Bewegungsrichtung des zweiten Schiffs umfassen, die Steuereinheit (330) das Augmented-Reality-Navigationsbild durch Analysieren das Navigationsbilds und Überlappen des ersten Augmented-Reality-Bilds an einem Ort des zweiten Schiffs in dem Navigationsbild erzeugt,
die Steuereinheit (330) eine Fotografierrichtung von dem Kameramodul (310) empfängt und eine Ausrichtung des Navigationsbilds bestimmt, GPS-Koordinaten des ersten Schiffs auf der Basis der ersten Schiffsinformationen bestimmt, und GPS-Koordinaten in dem Navigationsbild auf der Basis der GPS-Koordinaten des ersten Schiffs einstellt, und die Steuereinheit (330) das Navigationsbild in eine Vielzahl von Regionen unterteilt, einen Abstand zu jeder Region in Übereinstimmung mit einem durch jede Region in Bezug auf das Kameramodul (310) und die Oberfläche des Meeres gebildeten Winkel bestimmt, und GPS-Koordinaten in jeder der Regionen in Übereinstimmung mit dem bestimmten Abstand und der Richtung einstellt.

## Revendications

1. Dispositif d'assistance à la navigation utilisant une image de réalité augmentée, le dispositif comprenant :

une unité de communication(320) destinée à recevoir des données AIS issues d'un système d'identification automatique(AIS) ;
une unité de contrôle(330) destinée à générer une image de navigation en réalité augmentée, en déterminant des informations d'un premier navire correspondant à un premier navire embarqué avec un utilisateur et des informations d'un second navire correspondant à un second navire disposé à un emplacement adjacent au premier navire sur la base des données AIS, et en recevant une image de navigation obtenue en photographiant l'extérieur du premier navire depuis un module caméra(310) ;
une unité de génération d'image en réalité augmentée(340) destinée à générer le second navire comme première image en réalité augmentée sur la base des informations du premier navire et des informations du second navire ;
et une unité d'affichage d'image(350) destinée à afficher l'image de navigation en réalité augmentée, dans laquelle les informations du premier navire comportent des coordonnées GPS, la vitesse et la direction de déplacement du premier navire, et les informations du second navire comportent des coordonnées GPS, la vitesse et la direction de déplacement du second navire, l'unité de contrôle(330) génère l'image de navigation en réalité augmentée en analysant l'image de navigation et en superposant la première image en réalité augmentée à l'emplacement du second navire dans l'image de navigation,
l'unité de contrôle(330) reçoit une direction de photographie depuis le module caméra(310) et détermine une orientation de l'image de navigation, détermine les coordonnées GPS du premier navire sur la base des informations du premier navire, et définit des coordonnées GPS dans l'image de navigation sur la base des coordonnées GPS du premier navire, et l'unité de contrôle(330) partitionne l'image de navigation en une pluralité de régions, détermine une distance à chacune des régions en fonction d'un angle formé par chaque région par rapport au module caméra(310) et à la surface de la mer, et établit des coordonnées GPS dans chacune des régions en fonction de la distance déterminée et de la direction.

2. Dispositif selon la revendication 1, dans lequel l'unité de contrôle(330) sélectionne une première région dont les coordonnées GPS correspondent aux coordonnées GPS du second navire parmi les régions, et génère l'image de navigation en réalité augmentée en superposant la première image en réalité augmentée sur la première région.

3. Dispositif selon la revendication 1, dans lequel l'unité de communication(320) reçoit des données ECDIS d'un système d'affichage et d'information de cartes électroniques, l'unité de contrôle(330) détermine des informations d'environnement relatives à l'environnement environnant sur la base des données ECDIS, l'unité de génération d'image en réalité augmentée(340) génère l'environnement environnant comme deuxième image en réalité augmentée sur la base des informations d'environnement, et l'unité de contrôle(330) génère l'image de navigation en réalité augmentée en analysant l'image de navigation et en superposant la deuxième image en réalité augmentée à l'emplacement de l'environnement environnant dans l'image de navigation.

4. Dispositif selon la revendication 1, dans lequel l'unité de contrôle(330) analyse les informations du premier et du second navire à un premier instant, sélectionne un second navire qui sera adjacent au premier navire à moins d'une première distance de référence après le premier instant lorsque la trajectoire et la vitesse de chaque navire sont maintenues, et détermine que le second navire sélectionné constitue un navire à risque de collision.

5. Dispositif selon la revendication 4, dans lequel l'unité de contrôle(330) affiche uniquement la première image en réalité augmentée du second navire sélectionné parmi une pluralité de seconds navires comme navire à risque de collision à superposer à l'image de navigation.

6. Dispositif selon la revendication 5, dans lequel l'unité de contrôle(330) représente les autres navires parmi la pluralité de seconds navires sous forme de symboles d'identification et affiche les symboles d'identification sur l'image de navigation en réalité augmentée.

7. Dispositif d'assistance à la navigation utilisant une image de réalité augmentée, le dispositif comprenant :

une unité de communication(320) destinée à recevoir des données radar d'un radar maritime ; une unité de contrôle(330) destinée à générer une image de navigation en réalité augmentée, en déterminant des informations d'un premier navire correspondant à un premier navire embarqué avec un utilisateur et des informations d'un second navire correspondant à un second navire disposé à un emplacement adjacent au premier navire sur la base des données radar, et en recevant une image de navigation obtenue en photographiant l'extérieur du premier navire depuis un module caméra(310) ;
une unité de génération d'image en réalité augmentée(340) destinée à générer le second navire comme première image en réalité augmentée sur la base des informations du premier navire et des informations du second navire ;
et une unité d'affichage d'image(350) destinée à afficher l'image de navigation en réalité augmentée, dans laquelle les informations du premier navire comportent des coordonnées GPS, la vitesse et la direction de déplacement du premier navire, et les informations du second navire comportent des coordonnées GPS, la vitesse et la direction de déplacement du second navire, l'unité de contrôle(330) génère l'image de navigation en réalité augmentée en analysant l'image de navigation et en superposant la première image en réalité augmentée à l'emplacement du second navire dans l'image de navigation,
l'unité de contrôle(330) reçoit une direction de photographie depuis le module caméra(310) et détermine une orientation de l'image de navigation, détermine les coordonnées GPS du premier navire sur la base des informations du premier navire, et définit des coordonnées GPS dans l'image de navigation sur la base des coordonnées GPS du premier navire, et l'unité de contrôle(330) partitionne l'image de navigation en une pluralité de régions, détermine une distance à chacune des régions en fonction d'un angle formé par chaque région par rapport au module caméra(310) et à la surface de la mer, et établit des coordonnées GPS dans chacune des régions en fonction de la distance déterminée et de la direction.

10

100

| Automatic
identification system |

200

| Electronic chart display
and information system |

300

EN

SH2

SH1

IM

FIG. 1

300

| Camera module | 310 |

| Communication unit | 320 |

| Control unit | 330 |

| Augmented reality
image generation unit | 340 |

| Image display unit | 350 |

FIG. 2

IMa

SH2a

SH2b

SH1

FIG. 3A

FIG. 3B

FIG. 3C

FIG. 4

FIG. 5

300

Communication unit — 310

Control unit — 320

3D image generation unit — 330

Image display unit — 340

FIG. 6

FIG. 7A

FIG. 7B

FIG. 7C

FIG. 7D

10'

400

Marine radar

300

EN

SH1

SH2

IM

FIG. 8

10''

100

Automatic
identification system

200

Electronic chart display
and information system

400

Marine radar

300

EN

SH1

SH2

IM

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101072397 B1